# EUROPÄISCHE PATENTSCHRIFT

(11) **EP 3 166 773 B1**
(45) Veröffentlichungstag und Bekanntmachung des Hinweises auf die Patenterteilung: **01.09.2021**
(21) Anmeldenummer: 15736832.5
(22) Anmeldetag: 10.07.2015
(51) Int. Cl.: B29C 64/153, B28B 1/00, B29C 64/165, B33Y 10/00

(54) **AUFBAU EINER GEOMETRISCH DICHT GEPACKTEN PULVERSCHICHT**
ASSEMBLY OF A GEOMETRICALLY COMPACT POWDER LAYER
CONSTITUTION D'UNE COUCHE PULVÉRULENTE GÉOMÉTRIQUEMENT COMPACTÉE

(30) Priorität: 10.07.2014 DE 102014109706
(43) Veröffentlichungstag der Anmeldung: 17.05.2017
(73) Patentinhaber: Bundesrepublik Deutschland, vertreten durch den Bundesminister für Wirtschaft und Energie, 12205 Berlin (DE)
(72) Erfinder: GÜNSTER, Jens, 14169 Berlin (DE); ZOCCA, Andrea, 12167 Berlin (DE); MORAIS GOMES, Cynthia, 12163 Berlin (DE); MÜHLER, Thomas, 38678 Clausthal-Zellerfeld (DE)
(74) Vertreter: Zimmermann & Partner Patentanwälte mbB
(86) Internationale Anmeldenummer: PCT/EP2015/065888
(87) Internationale Veröffentlichungsnummer: WO 2016/005588

(56) Entgegenhaltungen:
- WO-A1-2014/049159
- US-A1- 2002 079 601
- US-B1- 6 217 816
- None

## Beschreibung

Die Erfindung liegt auf dem Gebiet der additiven Fertigung, insbesondere der Fertigung von Prototypen keramischer Grünkörper und betrifft die Erzeugung eines hochdichten Pulverbetts und dessen Verwendung zur Herstellung eines Festkörpers.

Bei additiven Fertigungsverfahren, die auf dem schichtweisen Aufbau des Ausgangsmaterials als Pulver beruhen, ist der Schichtauftrag einen wesentlicher Prozessschritt. Durch das wiederholte Auftragen von Pulverschichten und das Schreiben der Schichtinformation in die jeweilige Schicht wird ein im Computer animiertes und in virtuelle Schichten zerlegtes Bauteil Schicht für Schicht aus aufeinander folgenden Pulverschichten aufgebaut. Das gesamte, durch wiederholtes Auftragen von Schichten aufgebaute Pulvergebilde, welches das Bauteil einschließt, heißt Pulverbett.

Die losen Pulverschüttungen keramischer Partikel, metallischer und polymerer Pulver, die in entsprechenden pulverbasierten additiven Fertigungsprozessen schichtweise aufgebaut werden, weisen typischerweise nur eine geringe Dichte auf, die im Mittel der Schüttdichte der Partikel entspricht. Das erschwert die Generierung eines kompakten Bauteils im additiven Fertigungsprozess selbst oder während eines nachgeschalteten Sinterprozesses. Im Falle von keramischen Pulvern ist es ausgehend von losen Schüttungen sogar unmöglich, ein kompaktes Bauteil zu erhalten. Weiterhin bedingt die geringe Dichte des Pulverbetts eine geringe Festigkeit des Pulverbetts. Daher muss in der Regel synchron zum eigentlichen Bauteil eine Supportstruktur für das Bauteil aufgebaut werden. Aufgabe der Supportstruktur ist die Fixierung des Bauteils gegenüber der Bauplattform und somit im Koordinatensystem der Anlage. Der Aufbau dieser Supportstruktur ist zeitaufwendig. Ebenso ist das spätere Entfernen der Supportstruktur vom eigentlichen Bauteil nach dem Abschluss des Aufbauprozesses zeitaufwendig und typischerweise nicht automatisierbar.

Die Druckschrift WO 2014/049159 A1 beschreibt ein Verfahren zur Stabilisierung eines Pulverbetts mittels Unterdruck. Die Druckschrift US 2002/079601 A1 beschreibt ein Verfahren und eine Vorrichtung zur Anfertigung von Prototypen eines dreidimensionalen Objekts. Die Druckschrift US 6 217 816 B1 beschreibt ein Verfahren zur Schnellformung keramischer Werkstücke.

Vor diesem Hintergrund wird ein Fertigungsverfahren zur Herstellung einer Schicht geometrisch dicht gepackter Partikel nach Anspruch 1 und ein additives Fertigungsverfahren nach Anspruch 7 vorgeschlagen.

Weitere Ausführungsformen, Modifikationen und Verbesserungen ergeben sich anhand der folgenden Beschreibung und der beigefügten Ansprüche.

Gemäß einer ersten Ausführungsform wird ein Fertigungsverfahren zur Herstellung einer Schicht geometrisch dicht gepackter Partikel in einem additiven Fertigungsverfahren vorgeschlagen. Das additive Verfahren umfasst die Schritte:
a) Bereitstellen einer Partikelschichtabscheidungsanordnung. Die Partikelschichtabscheidungsanordnung hat einen ersten und einen zweiten Halbraum, wobei der erste Halbraum einen Partikel-Vorratsbehälter umfasst. Beide haben eine Wand gemeinsam, die als Trennwand den ersten Halbraum vom zweiten Halbraum trennt. Die Trennwand ist permeabel für ein Dispersionsmedium und impermeabel für die in dem Dispersionsmedium dispergierten Partikel;
b) Bereitstellen einer Partikeldispersion im ersten Halbraum, wobei die Partikeldispersion das Dispersionsmedium und darin dispergierte Partikel umfasst. Die Partikeldispersion ist im Wesentlichen homogen im ersten Halbraum verteilt, insbesondere ist sie homogen über den ersten Halbraum verteilt, wobei das Bereitstellen der Partikeldispersion durch ein Einleiten eines gerichteten Stromes des Dispersionsmittels in den Partikel-Vorratsbehälter unmittelbar im ersten Halbraum erfolgt;
c) Erzeugen eines Druckgradienten zwischen dem ersten und dem zweiten Halbraum, sodass der Druckgradient im ersten Halbraum einen zur Trennwand gerichteten Strom der Partikeldispersion bewirkt. Insbesondere führt der Strom stets neue Partikel an die Trennwand heran;
d) Abscheiden eines Partikel-Haufwerks umfassend geometrisch dicht gepackte Partikel auf der Trennwand durch Transport von Dispersionsmittel in den zweiten Halbraum.Auf Grund der Filterwirkung der Trennwand und der beständigen Abführung partikelfreien Dispersionsmittels durch die Trennwand hindurch werden die Partikel vor der Trennwand abgelagert; und
e) Glätten des Partikel-Haufwerks mittels Schaben und/oder Schleifen, sodass Partikel des Partikel-Haufwerks solange abgetragen werden, bis die Schicht geometrisch dicht gepackter Partikel auf der Trennwand eine gleichmäßige Schichtdicke aufweist.

Vorteile dieser Ausführungsform ergeben sich aus einer bei der gegebenen Partikelgröße und Partikelgrößenverteilung erreichbaren maximalen Packungsdichte der auf der Trennwand erzeugten Partikelschicht. Beispielsweise beträgt für eine geometrisch dichte Kugelpackung gleicher Kugeldurchmesser eine maximale Packungsdichte (Raumfüllung) 74 %, wenn man zu Grunde legt, dass nur vollständige Partikel an der Ausbildung der Schicht beteiligt sind. Die tatsächliche Dichte ergibt sich dann aus der durchschnittlichen Dichte der Partikel. Weiter kann so eine über die gesamte Ausdehnung der Schicht konstante Schichtdicke erzielt werden.

Gemäß einer Weiterbildung ist zwischen den Schritten c) und d) ein weiterer Schritt cc) eingefügt. Diers Schritt cc) umfasst das Bereitstellen eines Fließbetts dispergierter Partikel im ersten Halbraum. Dabei steht das Fließbett zumindest abschnittsweise im Kontakt mit der Trennwand. Außerdem weist die Partikeldispersion des Fließbetts eine höhere Dichte auf, als in einem außerhalb des Fließbetts liegenden Abschnitt der Partikeldispersion im ersten Halbraum.

Vorteile dieser Ausführungsform umfassen die Vorteile von Fließbetten allgemein. Die Partikeln im Fließbett sind mechanisch aktiviert, etwaige Unebenheiten einer Fläche, über die sich das Fließbett ergießt, werden rasch ausgeglichen. Im Ergebnis dessen stellt das Fließbett eine ideale Quelle für das Nachströmen von Partikeln aus der Partikeldispersion an die Trennfläche, d.h. zu bereits dort angelagerten oder unter Einfluss des Druckgradienten fixierten Partikeln dar.

Gemäß einer weiteren Ausführungsform weist das Partikel-Haufwerk lediglich zwei Phasen auf und umfasst eine Partikelphase und eine Fluidphase.

Insbesondere das Vorliegen nur einer Fluidphase unterscheidet das geordnete Partikelhaufwerk in Form der Schicht geometrisch dicht gepackter Partikel von bekannten Partikelschichtungen. Beispielsweise kann eine im Wesentlichen trockene, nur in einem gasförmigen Dispersionsmittel vorliegende Partikeldispersion die Schicht geometrisch dicht gepackter Partikel ausbilden. Eine Schicht geometrisch dicht gepackter Partikel, die unter Zuhilfenahme einer Flüssigkeit, beispielsweise Wasser, und eines Gases, beispielsweise Luft, erzeugt wurde, weist in ihrem Porenraum nebeneinander Wasser und Luft auf. Dabei liegt das Wasser nicht nur als Lage adsorptiv gebundener Wassermoleküle vor: Eine Lage adsorptiv gebundenen Wassers bedeckt unter normalen Bedingungen eines nicht apparativ kontrollierten Klimas auf Meeresspiegelniveau nahezu alle Oberflächen. Im Gegensatz zu diesem adsorptiv gebundenen Wasser liegt, beispielsweise beim Erzeugen eines Partikelhaufwerkes aus einer wässrigen Dispersion (Schlicker), das Wasser als regelrecht flüssige Phase vor, beispielsweise in Partikelzwischenräumen. Beispielsweise unterscheidet sich die verfahrensgemäß erzeugte Schicht geometrisch dicht gepackter Partikel von einem einfachen Filterkuchen, wie er bei mechanischer Filtration auf einem Filter anfällt, durch das Fehlen dieser Wasserphase. Das ist besonders bedeutsam, wenn die erzeugte Schicht geometrisch dicht gepackter Partikel beispielsweise thermisch verfestigt werden soll. Liegt in der Schicht flüssiges Wasser vor, so würde die Schicht durch entweichenden Wasserdampf aufgelockert und vor dem beabsichtigten Verfestigen ihre hohe Packungsdichte verlieren.

Gemäß einer weiteren Ausführungsform umfasst das vorgeschlagene additive Fertigungsverfahren weiterhin einen als Schritt f) bezeichneten Schritt: Ablegen der Schicht geometrisch dicht gepackten Partikel gleichmäßiger Schichtdicke außerhalb der Partikelschichtab scheidungsanordnung.

Vorteile dieser Ausführungsform ergeben sich aus der zeitlich versetzen Verwendung erzeugter Schichten. Im Ergebnis mehrerer Durchläufe, umfassend die Schritte a) bis f) kann so eine Vielzahl unterschiedlicher Schichten gleichmäßiger Schichtdicke, umfassend geometrisch dicht gepackte Partikel bereitgestellt werden. Die Schichten können sich hinsichtlich ihrer Schichtdicken, ebenso aber auch hinsichtlich des stofflichen Charakters oder der Feinstruktur der die Schichten ausbildenden Partikel unterscheiden. Es können also unterschiedlich starke Schichten aufeinander gestapelt werden. Ebenso können Schichten seitlich versetzt aufeinander gestapelt werden. Das bietet erweiterte Möglichkeiten zur Fertigung dreidimensionaler Objekte.

Gemäß der Erfindung erfolgt das Bereitstellen der Partikeldispersion durch Erzeugen der Dispersion unmittelbar im ersten Halbraum. Beispielsweise wird ein Strom des Dispersionsmittels in einen Partikel-Vorratsbehälter im ersten Halbraum eingeleitet, um die Partikeldispersion zu erzeugen. Dazu kann ein gerichteter Strahl des Dispersionsmittels in den mit Partikeln gefüllten Vorratsbehälter eingeleitet werden. Ebenso kann eine oder mehrere Prallflächen verwendet werden, um eine homogene Verteilung der Partikeldispersion im ersten Halbraum zu erzielen.

Vorteile dieser Merkmale ergeben sich aus der restlosen Verwertbarkeit vorhandener Partikeln. Nach einem Prozessdurchlauf können verbliebene Partikel erneut verlustlos gesammelt werden und ggf. in einem anderen Verfahren auf einer anders gearteten Trennwand zu Schichten gleichmäßiger, d. h. im Wesentlichen konstanter Dicke geformt werden.

Gemäß einer Weiterbildung dieser Ausführungsform umfasst das Erzeugen der Dispersion im ersten Halbraum ein Einleiten eines Gases oder eines Gasgemisches in den ersten Halbraum.

Vorteile dieser Ausführungsform ergeben sich aus der Flexibilität des Dispergierverfahrens. Die Ausrichtung, Strömungsstärke (Fluss), Strömungsprofil etc. des eingeleiteten Gasstromes kann ein Gas, verschiedene Gase, oder ein oder mehrere Gasgemische umfassen. Beispielsweis können die Parameter des Einleitens angepasst sein an eine Dichte des Partikelmaterials.

Gemäß der Erfindung wird vorgeschlagen, das Glätten mit Hilfe einer Streicheinheit vorzunehmen, wobei die Streicheinheit eine rotierende Walze, eine rotierende Bürste, eine Klinge und/oder einen Schieber umfasst. Die rotierende Walze, die rotierende Bürste, die Klinge und/oder der Schieber werden mit Hilfe der Streicheinheit so über das Haufwerk geführt, dass die gleichmäßige Schichtdicke erzielbar ist. Insbesondere kann die Streicheinheit in einem fest einstellbaren Abstand zur Trennwand mit einer konstanten Fortschrittsgeschwindigkeit über das Haufwerk auf der Trennwand geführt werden. Eine hierbei einstellbare gleichmäßige Schichtdicke liegt in einem Bereich von 500 nm bis 5 mm, insbesondere zwischen 1 µm und 500 µm, vorzugsweise zwischen 30 µm und 200 µm.

Vorteile dieser Ausführungsform bestehen beispielsweise in der Möglichkeit, die Streicheinheit an die Partikelart und -größe anpassen zu können.

Dabei ist die Klinge und/oder der Schieber rotierend oder starr mit der Streicheinheit verbunden.

Vorteile ergeben sich aus der Möglichkeit des schonenden Abtragens von vorliegenden Unebenheiten, ohne dass die unter einem abgetragenen Teil der Schicht anstehende Partikelpackung aufgelockert wird.

Gemäß einer weiteren Ausführungsform wird die Verwendung der wie beschrieben hergestellten Schicht geometrisch dicht gepackter Partikel gleichmäßiger Schichtdicke in einem additiven Fertigungsverfahren vorgeschlagen. Dieses additive Fertigungsverfahren umfasst die Schritte: g) Stapeln von verschiedenen Schichten geometrisch dicht gepackten Partikel gleichmäßiger Schichtdicke; gg) lokal begrenztes Verbinden benachbarter Partikel einer Schicht über die gesamte Schichtdicke dieser einen Schicht hinweg; und ggg) zumindest teilweises Befestigen von unmittelbar benachbarten Schichten eines Schichtstapels zueinander. Hierbei erfolgt das zumindest teilweise Befestigen in Bereichen lokal begrenzt verbundener benachbarter Partikel der benachbarten Schichten.

Vorteile dieser Ausführungsform umfassen das Stapeln von Schichten, die sich zumindest hinsichtlich eines Parameters unterscheiden: Schichtdicke, Größe der Partikel, chemische Zusammensetzung der Partikel, insbesondere das Vorliegen funktionaler Gruppen an der Oberfläche der Partikel.

Gemäß einem nicht beanspruchten Beispiel des additiven Fertigungsverfahrens zur Herstellung eines Festkörpers aus Schichten jeweils gleichmäßiger Schichtdicke umfassend geometrisch dicht gepackte Partikel, umfasst das Fertigungsverfahren die Schritte:
i) Bereitstellen einer ersten Schicht geometrisch dicht gepackter Partikel gleichmäßiger Schichtdicke;
ii) Erzeugen eines Schichtstapels durch Stapeln einer zweiten Schicht geometrisch dicht gepackter Partikel auf einer Oberfläche der ersten Schicht zur Erzeugung eines Schichtstapels; oder Erzeugen eines Schichtstapels durch Herstellen einer zweiten Schicht geometrisch dicht gepackter Partikel auf einer Oberfläche der ersten Schicht unter Verwendung eines Fließbetts als Partikelquelle und eines Luft- oder Gasstromes durch die Trennwand und die sich auf dieser Trennwand befindliche, bereits abgeschiedene Schicht hindurch;
iii) lokal begrenztes Fixieren von zueinander benachbarten Partikeln, das über die gesamte Schichtdicke der zweiten Schicht reicht und die Oberfläche der ersten Schicht erfasst, wobei das lokale begrenzte Fixieren umfasst:
   - ein lokales Auftragen eines Fixierungsmittels, oder
   - ein lokales Exponieren gegenüber einer elektromagnetischen Strahlung,
   - oder ein lokales Erwärmen mit einem Laserstrahl.

Vorteile dieses Beispiels umfassen die Möglichkeit seriell, eine über der anderen, mehrere Schichten aufeinander anzuordnen, indem die zuvor auf der Trennwand erzeugte Schicht als Unterlage für die nachfolgend additiv abgeschiedene Partikelschicht dient. Insbesondere kann das durch ein schrittweises (mit jedem abgeschlossenen Schichtabscheidungsvorgang erfolgenden) Absenken der Trennwand erfolgen.

Gemäß einer Weiterbildung dieses Beispiels, hier als Schritt iv) bezeichnet, wird der Fluss, d.h. der Volumenstrom des Dispersionsmittels durch die Trennwand zumindest während des additiven Aufbaus einer Schichtfolge bzw. der Erzeugung des hochdichten Pulverbettes konstant gehalten. Das bedeutet, dass ein Volumen des Dispersionsmittels, dass innerhalb einer Zeiteinheit aus dem ersten Halbraum durch die Trennwand in den zweiten Halbraum strömt, zumindest während des Erzeugens des Schichtstapels gemäß Schritt ii), im Rahmen der Genauigkeit prozesstechnisch verwendeter Gerätschaften (umfassend z.B. Strömungsmesser und/oder Flussmesser und/oder Drucksensor und/oder Pumpe etc.) im Wesentlichen konstant ist. Das kann insbesondere durch die gezielte Regulation des Druckes im ersten Halbraum und/oder im zweiten Halbraum erreicht werden. Beispielsweise kann dazu zumindest ein Drucksensor im zweiten Halbraum, d.h. jenem durch die Trennwand von Partikeln im Wesentlichen frei gehaltenen Raum angeordnet sein. Alternativ oder zusätzlich kann ein Strömungsmesser geeignet angeordnet sein. Ebenso kann eine Flussmessung an, in, oder hinter der Trennwand im zweiten Halbraum, beispielsweise mittels Laser- oder Ultraschall-Dopplerverfahren, vorgenommen werden.

Vorteile dieses Beispiels ergeben sich aus einer homogenen Packungsdichte des hochdichten Pulverbetts, bzw. über die Höhe des auf der Trennwand angeordneten, und mit jeder weiteren aufgebrachten Schicht wachsenden Schichtstapels. Analog hierzu ist das mittlere Porenvolumen im erzeugten Festkörper im Wesentlichen identisch. Das ist von Vorteil für die Verwendung des Festkörpers als Prototyp. Prototypen werden häufig nicht nur zur Visualisierung eines äußeren Erscheinungsbildes, sondern zur Prozessoptimierung eingesetzt oder zur Ermittlung funktionsbestimmender Parameter herangezogen. Vor diesem Hintergrund sind Inhomogenitäten im Festkörper unerwünscht.

Gemäß einem weiteren Beispiel wird vorgeschlagen, dass sich die Schichtdicken von zumindest zwei der gestapelten Partikelschichten unterscheiden.

Vorteile dieses Beispiels bestehen in der großen Vielfalt erhältlicher dreidimensionaler Festkörper.

Gemäß einem weiteren nicht beanspruchten Beispiel erfolgt das Stapeln durch: h) Wiederholen der Schritte b), c), d) und e) gemäß Anspruch 1, wobei nach dem Glätten gemäß Schritt e) und vor einem wiederholten Abscheiden gemäß Schritt d) ein weiterer Schritt hh) durchgeführt wird. Dieser Schritt hh) umfasst ein lokal begrenztes Fixieren der geglätteten Schicht dicht gepackter Partikel mit gleichmäßiger Schichtdicke. Dabei erfolgt das lokal begrenzte Fixieren durch ein lokales Auftragen eines Fixierungsmittels. Alternativ kann auch ein lokales Exponieren gegenüber einer elektromagnetischen Strahlung, insbesondere gegenüber einer Laserstrahlung erfolgen. Typischerweise bewirkt die Laserstrahlung ein lokales Erwärmen der Partikelschicht.

Vorteile dieses Beispiels bestehen in der Vielfalt möglicher Verfestigungs-Prinzipien: Durch Sintern, durch abschnittsweises Verschmelzen, durch Kleben, durch Polymerisieren, durch Ausbilden kovalenter oder nicht-kovalenter chemischer Bindungen.

Gemäß einem weiteren nicht beanspruchten Beispiel erfolgt das lokal begrenzte Fixieren ausschließlich an Abschnitten der Partikelschicht, die einer Kontur des schichtweise aufgebauten Festkörpers entsprechen oder unmittelbar benachbart sind zu einer Kontur und/oder einem Oberflächenabschnitt des schichtweise aufgebauten Festkörpers.

Vorteile dieses Beispiels ergeben sich aus der Beschleunigung der Arbeitsschritte.

Gemäß einem weiteren Beispiel wird vorgeschlagen, dass bei dem hier in Rede stehenden Verfahren zur additiven Herstellung eines Festkörpers der Festkörper ein Grünkörper ist und die Partikel ein keramisches Pulver sind.

Vorteile dieses Beispiels ergeben sich aus der großen praktischen Bedeutung von keramischen Grünkörpern und deren effizienter Fertigung.

Gemäß einer Weiterbildung umfasst das keramische Pulver Partikel mit einem mittleren Partikeldurchmesser von 50 nm bis 500 µm, insbesondere Partikel mit mittleren Partikeldurchmessern zwischen 200 nm und 250 µm, bevorzugt zwischen 1 µm und 100 µm.

Gemäß einem weiteren Beispiel umfasst das additive Verfahren weiterhin ein Freistellen des keramischen Grünkörpers mittels Entfernens nicht fixierter Partikel bzw. nicht fixierter Anteile der gestapelten Schichten. Beispielsweise werden lose anhaftende Partikel auf verfestigten bzw. fixierten Anteilen im Pulverbett solange entfernt, bis der eigentliche Grünkörper vorliegt und die entfernten lose anhaftenden Partikel gesammelt wurden und erneut einem Schichtabscheidungsvorgang zugeführt werden können.

Vorteile dieses Beispiels ergeben sich aus der Rückgewinnung der nicht fixierten Anteile. Es können weitestgehend geschlossene Fertigungskreisläufe realisiert werden, wobei Ausgangsmaterialien (Partikel) in einem geschlossenen Kreislauf geführt werden.

Gemäß einem weiteren Beispiel erfolgt das Freistellen automatisch mit Hilfe eines gerichtet unter einem fluidischen Druck applizierten Fluids.

Vorteile dieses Beispiels ergeben sich daraus, dass das als Dispersionsmittel eingesetzte Fluid auch zur Freistellung verwendet werden kann.

Gemäß einem weiteren Beispiel umfasst das Freistellen ein Einwirken bzw. ein Einkoppeln akustischer und/oder mechanischer Schwingungen auf den bzw. in den Schichtstapel.

Vorteile dieses Beispiels ergeben sich wiederum aus der Möglichkeit zur Automatisierung. Besagte Schwingungen können berührungslos eingekoppelt werden, sodass keine Gefahr besteht, die Oberfläche des Grünkörpers zu verunreinigen oder mechanisch zu beschädigen.

Verwendung eines additiven Fertigungsverfahrens gemäß einem der vorstehend beschriebenen Verfahren zur Herstellung eines keramischen Grünkörpers.

Vorteile dieses Beispiels kommen vorrangig bei der automatisierten Prototypen-Fertigung / Rapid Prototyping und der seriellen Fertigung für Losgrößen < 1000 zur Geltung: Geringe Materialkosten durch effektive Verwendung hochwertiger und exakt klassierter Partikelfraktionen. Die Verwendung sehr kleiner Partikel zum Aufbau von Partikelschichten mittels konventioneller Verfahren ist durch die unzureichende Rieselfähigkeit und den wachsenden Einfluss von Oberflächenladungen auf das Rieselverhalten eingeschränkt. Typischerweise sind keramische Partikel unter 30 µm nicht ausreichend rieselfähig für einen effizienten Schichtaufbau, wenn sie mittels konventioneller Auftragstechniken appliziert werden.

Die beschriebenen Ausführungsformen und Beispiele können beliebig miteinander kombiniert werden.

Bei pulverbasierten additiven Fertigungsverfahren erfolgt der Schichtauftrag durch das Überstreichen eines Pulverreservoirs mittels einer flachen Streicheinheit. Diese Streicheinheit kann eine rotierende Walze oder einer Klinge, oder eine vibrierende Klinge oder ähnliches umfassen. Der eigentliche Prozess des Auftragens der Schicht erfolgt dadurch, dass die Streicheinheit einen festen Abstand zur Oberfläche des Pulverbettes hat. Dieser Abstand ist über die gesamte Schicht einheitlich.

So kann das Pulver während des Auftragens zwischen die Schichteinheit und das Pulverbett rieseln und dort die jeweilige Schicht ausbilden. Das Rieseln ist im Wesentlichen gravitationsgetrieben. Das heißt, dass die einzelnen Pulverpartikel der Gravitation folgen. Daraus ergibt sich, dass abhängig von der Orientierung der Ebene, in welcher sich die Streicheinheit bewegt, eine Orientierung der Pulverbettoberfläche mit der Oberflächennormalen der Pulverbettoberfläche in Richtung der Gravitationskraft erfolgt und ein Winkel zwischen der Oberflächennormalen der Pulverbettoberfläche und des Vektors der Gravitationskraft gleich 0° ist (wenn horizontale Schichten erzeugt werden), oder einen Winkel kleiner 90° einschließt (wenn der Schichtauftrag in einer geneigten Ebene erfolgt). Typischerweise ist dieser Winkel kleiner als 60°, da sonst die Stabilität des Pulverbetts nicht gewährleistet wäre. Das Überstreichen des Pulverbetts mit konstantem Abstand der Streicheinheit zur Pulverbettoberfläche definiert schließlich die Dicke der aufgetragenen Pulverschicht.

Das beschriebene Verfahren zum Auftrag von Pulverschichten ist nur mit Hilfe der Gravitationskraft oder einer vergleichbaren Kraft (z.B. Zentrifugalkraft) möglich. Die Pulverpartikel befinden sich stets in direktem Kontakt mit weiteren Pulverpartikeln, dem Pulverreservoir. Daraus ergibt sich eine eingeschränkte Beweglichkeit der einzelnen Pulverpartikel. Das wiederum behindert eine optimale Anlagerung von Pulverpartikeln zu einer dichtesten Packung an der Oberfläche des Pulverbettes. In suspensionsbasierten Schichtauftragsverfahren wird eine deutlich höhere Packungsdichte (> 60%) erzielt. Derartige Schichtauftragsverfahren sind z.B. bei der Verarbeitung von keramischen Partikeln beim sogenannten Schlickerguss üblich. Die flüssige Phase wirkt hierbei quasi als Schmierstoff zwischen den einzelnen Pulverpartikeln und begünstigt die Ausbildung einer dichten Packung.

Eine Klasse der frühen Verfahren zur additiven Fertigung bilden die pulverbasierten Verfahren, bei denen Pulverschichten einer typischen Dicke von 50 bis 200 µm gestapelt werden. In jeder dieser Schichten werden die Pulverpartikel durch einen lokal aufgebrachten Binder oder mittels lokalem Schmelzen mit Hilfe eines Laserstrahls untereinander und mit der jeweils darunter liegenden Schicht verbunden.

Die binderbasierten Pulververfahren wurden am Massachusetts Institute of Technology in Cambridge, USA Anfang der 90er Jahre, die laserbasierten an der University of Texas in Austin, USA Ende der 80-er Jahre des letzten Jahrhunderts entwickelt. Sie werden als 3D Druck [1] bzw. Selektives Laser Sintern [2] bezeichnet. Beide Verfahren haben heute ihren festen Platz unter den mittlerweile zahlreichen additiven Fertigungsverfahren gefunden und gehören bezüglich Anzahl der gefertigten Bauteile sicherlich zu den führenden Verfahren.

Neben einer kontinuierlichen Optimierung der diesen beiden Verfahren zugrundeliegenden Technologien, hat in den 30 Jahren seit ihrer Erfindung keine wesentliche Weiterentwicklung beim 3D Druck bzw. bei Selektivem Laser-Sintern stattgefunden.

Es gibt eine Vielzahl von Verfahren, bei denen als Ausgangsmaterial ein pulverförmiges Material eingesetzt wird. Beispielhaft seien die drei verbreitetsten Verfahren genannt:

Das Selective Laser Sintering (SLS) wurde ursprünglich für Pulver aus Nylon Polycarbonat und Wachsen entwickelt und später auf Metallpulver übertragen. In einem Reaktor werden auf ein Pulverbett Pulverschichten lokal aufgesintert, wobei die Sintertemperatur durch Einsatz von Lasern erreicht wird [2].

Das Selective Laser Melting (SLM) ist eine Weiterentwicklung des Selective Laser Sintering (SLS) und wird für Pulver eingesetzt, die durch die Bildung einer Schmelzphase nahezu vollständig verdichtet werden können, wobei die Schmelztemperatur durch Einsatz von Lasern erreicht wird.

Das 3D Printing [1] verwendet Polymerpulver, metallische oder keramische Pulver zum Auftragen von Schichten, die dann mittels lokalen Einspritzens eines Binders verfestigt werden. Zum Einspritzen des Binders kommen Technologien vergleichbar dem Tintenstrahldruck zum Einsatz.

Alle pulverbasierten Verfahren haben die folgenden gemeinsamen Merkmale:
1. Die Formgebung geschieht nicht durch Materialabtrag, sondern durch Zugabe von Material. Es findet eine lokale Verfestigung eines pulverförmigen Ausgangsmaterials statt.
2. Alle Verfahren bauen Teilgeometrien aus Schichten endlicher Dicke auf, wobei die Schichten durch einen sogenannten Slice-Prozess, der direkt auf CAD-Daten basiert, realisiert werden.
3. Der Schichtauftrag erfolgt gravitationsgetrieben mittels eines rieselfähigen Pulvers, welches durch Überstreichen einer Streicheinheit über das Pulverbett zu einer Schicht geformt wird.

Der eigentliche Prozess des Auftragens der Schicht erfolgt dadurch, dass eine Streicheinheit einen festen, über die gesamte Schicht einheitlichen Abstand zur Oberfläche des Pulverbettes hat und das Pulver zwischen Streicheinheit und Pulverbett rieselt. Entweder wird beim Überstreichen des Pulverbetts das für den Schichtaufbau benötigte Pulver kontinuierlich durch eine Dosiereinheit nachgeliefert oder ein Pulverhaufen fungiert als Pulverreservoir.

Das Rieseln des Pulvers in den Zwischenraum zwischen Streicheinheit und Pulverbett ist gravitationsgetrieben, d.h., die einzelnen Pulverpartikel folgen der Gravitation. Das bedingt automatisch eine Orientierung der Pulverbettoberfläche mit der Oberflächennormalen der Pulverbettoberfläche in Richtung der Gravitationskraft. Ein Winkel zwischen der Oberflächennormalen der Pulverbettoberfläche und der Gravitationskraft ist somit gleich 0° oder schließt einen Winkel kleiner 90°, vorzugsweise kleiner 60° ein. Das Überstreichen des Pulverbetts mit konstantem Abstand der Streicheinheit zur Pulverbettoberfläche definiert schließlich die Dicke der aufgetragenen Pulverschicht.

Nach dem derzeitigen Stand der Technik können nur rieselfähige Pulver zu Schichten mit ausreichender Qualität aufgetragen werden. Dies bedeutet, dass eine gewisse minimale Partikelgröße der Pulver nicht unterschritten werden darf. Bei Pulvern mit zu feinen Partikeln sind die adhäsiven Kräfte zwischen den Partikeln vergleichbar groß wie diejenigen Kräfte, die durch die Gravitation auf die Partikel wirken. Typisch sind keramische Partikel unter 30 µm nicht ausreichend rieselfähig für einen effizienten Schichtaufbau. Das wirkt einem gleichmäßigen Rieseln und somit einem gleichmäßigen Schichtaufbau entgegen. Feinere Pulver bieten jedoch zahlreiche Vorteile, z.B. die Möglichkeit, dünnere Schichten aufzutragen. Daraus ergibt sich eine höhere Baugenauigkeit und eine bessere anschließende Verdichtung von Bauteilen durch Sintern, da kleinere Partikel sinterfähiger sind. Das Ansaugen von fluidisierten Partikeln durch das Pulverbett hindurch erlaubt nun die Verwendung von feineren Pulvern zum Aufbau von Pulverschichten während der additiven Fertigung. Partikel mit einem mittleren Partikeldurchmesser von unter 30 µm, insbesondere Partikel mit mittleren Partikeldurchmessern zwischen 200 nm und 30 µm, bevorzugt zwischen 1 µm und 10 µm, können somit problemlos verarbeitet werden.

Davon ausgehend ist es ein Ziel, die Dichte des Pulverbetts, welches durch schichtweises Auftragen von losem Pulver im pulverbasierten Fertigungsprozess aufgebaut wird und das aufzubauende Bauteil umschließt, zu erhöhen. Eine technische Aufgabe besteht mithin im Erzeugen einer kompakten Pulverschüttung (Pulverbett) beim Auftragen von Schichten eines losen Pulvers im additiven Fertigungsprozess mit losen Pulvern.
Bevorzugt werden gemäß allen hier beschriebenen Ausführungsformen dichteste Partikelpackungen erzielt, die ein gegenüber bekannten Schüttungen trockener Partikel vermindertes Porenvolumen aufweisen. Insbesondere ist eine erzielte Porosität des - wahlweise mittels Unterdruck oder mittels Überdruck - erzielten Partikel-Haufwerks geringer als 45 %. Beispielsweise beträgt ein Anteil des Porenvolumens am Gesamtvolumen des erzeugten Partikelhaufwerks maximal 43 %. Dementsprechend beträgt die Dichte des erzeugten Partikelhaufwerks zumindest 55 % der theoretischen Dichte der eingesetzten keramischen Pulvermischung, bzw. 57 %. Dabei wird unter der theoretischen Dichte diejenige Dichte eines nichtporösen Festkörpers verstanden, der die stoffliche Zusammensetzung des keramischen Pulver-Materials aufweist, welches das Haufwerk an der Trennwand zwischen erstem und zweitem Halbraum ausbildet. Die Bestimmung der Porosität erfolgt beispielsweise gravimetrisch mit einer Genauigkeit von ± 2% oder pyknometrisch mit einer Genauigkeit von kleiner / gleich ± 0,1 %. Vorteilhaft reichen bereits 55 % theoretische Dichte, bzw. sogar 45 % Porosität für einen sinterfähigen keramischen Grünkörper aus. Damit ist das beschriebene Verfahren zur Herstellung einer Schicht eines trockenen keramischen Pulvers in Verbindung mit einem Schritt, umfassend lokal begrenztes Fixieren von zueinander benachbarten Partikeln, geeignet zur Herstellung eines dicht sinterfähigen Grünkörpers. Für starre, weitestgehend gleichförmig sphärische Partikel ergeben sich zahlreiche Möglichkeiten einer Packung im Pulverbett. Im Vergleich zur idealisierten dichtesten Kugelpackung wird als dichteste Packung diejenige Packung angesehen, die einen minimalen Porenraum (< 40 Volumenprozent) bzw. die höchste erreichbare Dichte (∼ 74 % der theoretischen Dichte) aufweist.

Eine hohe Dichte der Pulver im Pulverbett führt zu einem verbesserten Schmelz- oder Sinterverhalten bei der Verdichtung von Pulver zu einem kompakten Bauteil unmittelbar während des additiven Fertigungsprozesses oder in einem sich anschließenden Sinterprozess.

Durch das Erzeugen eines in Richtung eines flächigen Filters gerichteten Gasstroms können einzelne Pulverpartikel an den Filter gesaugt werden. Der flächige Filter wird dabei mit einer Partikelschicht belegt. Hierzu müssen Pulverpartikel im Gasstrom kontinuierlich angeboten werden, was z.B. durch die Fluidisierung oder die Zerstäubung von Pulvern durch einen zweiten Gasstrom durch ein Pulverreservoir hindurch erreicht werden kann. Man bezeichnet ein derartig aktiviertes Pulver auch als Fließbett. Nachdem sich eine Schicht bestimmter Dicke auf dem Filter abgeschieden hat, werden der Filtereinheit keine weiteren Partikel angeboten. Die entstandene Schicht auf dem Filter wird möglicherweise eine nicht einheitliche Schichtdicke aufweisen. Eine einheitliche Schichtdicke wird in diesem Falle durch einen zusätzlichen Schritt des Pulverabtragens mittels eines mechanischen Schabens oder Schleifens erreicht.

Dazu wird eine Streicheinheit verwendet, die im Wesentlichen starre oder schwingende Klingen oder rotierende Walzen umfasst.

Ist die Schicht aufgebaut, wird die Schichtinformation wie bei den gängigen additiven Fertigungsverfahren mittel Einspritzen eines Binders (3D-Druck) oder durch lokales Lasersintern (Selektives Lasersintern) etc. in die Schicht übertragen. Anschließend wird der Prozessschritt des Pulverauftragens wiederholt, wobei nun die bereits erzeugten Pulverschichten ebenfalls als Filter fungieren. Dieser Prozess wiederholt sich, bis alle Schichten des aufzubauenden Bauteils abgearbeitet sind.

Die mit diesem Verfahren erzielte Packungsdichte der erzeugten Schicht ist vergleichbar mit der Packungsdichte der Schichten im keramischen Schlickerguss. Die Porosität der erzeugten Schicht ist somit geringer als 40 %.

Durch das Erzeugen eines Gasstroms durch einen flächigen Filter, der z.B. das Pulverbett selbst sein kann, können einzelne Pulverpartikel an den Filter gesaugt werden. Da sich die Pulverpartikel beim Ansaugvorgang nicht gegenseitig behindern, bis sie das poröse Substrat, durch das der Gasstrom aufgebaut wird, erreicht haben, können sich die Partikel weitestgehend frei und ungehindert zu einer dichtesten Packung anordnen.

Bevorzugte Plätze für ein neu angesaugtes Partikel auf eine bereits vorhandene Partikelschicht sind Punkte, an denen sich mehrere Partikel berühren. An diesen Punkten ist der Gasstrom durch die offene Porosität des bereits angesaugten Pulvers am stärksten. Vorteilhafterweise sind dies auch genau diejenigen Stellen an denen im Sinne einer dichtesten Kugelpackung eine neue Partikelschicht angelagert werden soll. Somit führt der Gasstrom die einzelnen Partikel zu Anlagerungspunkten auf der Oberfläche eines Pulverbetts, die bei nahezu sphärischen Partikeln gleicher Größe einer dichtesten Kugelpackung entsprechen.

Das ist nur möglich, solange sich die anzulagernden Partikel nicht gegenseitig behindern. Aus diesem Grunde wird das Pulver dem Filter dispergiert angeboten. Im Falle eines trockenen Pulvers und Luft als Dispersionsmedium verhindert ein Luftstrom, dass sich die Pulverpartikel zu nahe kommen und in ihrer Bewegung behindern, diesen Prozess nennt man auch durch Luft aktiviertes Pulver. Weiterhin werden Pulverpartikel im Gasstrom kontinuierlich angeboten, was z.B. durch die Fluidisierung oder Zerstäubung von Pulvern durch einen zweiten Gasstrom, der durch ein Pulverreservoir hindurch verläuft, erreicht werden kann. Mann bezeichnet ein derartig aktiviertes Pulver auch als Fließbett.

Bisherige Prozesse zum Schichtauftrag loser Pulver in additiven Fertigungsprozessen berücksichtigen nicht, dass die einzelnen Pulverpartikel Zeit und einen gewissen Freiraum benötigen um sich zu einer dichtesten Packung anzulagern. In allen bekannten Methoden des Schichtauftrags loser Pulverschichten in der additiven Fertigung behindern Pulverschüttungen diese freie Bewegung der Pulverpartikel. Die rein gravitatorischen Kräfte beim Schichtauftrag rieselfähiger Pulver reichen nicht aus, um die Partikel an die optimalen Positionen für eine dichteste Kugelpackung zu führen. Die Kombination eines durch das Pulverbett hindurch geführten zweiten Luftstromes, des so fluidisierten Pulvers oder Pulverstaub s als Pulverquelle mit dem durch den Filter geführten zum Schichtaufbau genutzten ersten Luftstrom ermöglichen dies. Beispielartig ist vorstehend die Verwendung von Luftströmen zur Erzeugung eines (Pulver-)Fließbetts als Pulverquelle beschrieben. Dem Fachmann ist jedoch bewusst, dass auch andere Gase oder Gasgemische als Luft zur Erzeugung des Pulver-Fließbetts verwendet werden können. Ebenso können auch andere Fluide als Luft, Gase oder Gasgemische, beispielsweise Flüssigkeiten als Dispersionsmedien zur Erzeugung des Pulver-Fließbetts (Pulverquelle) verwendet werden.

Gemäß vorbekannten Verfahren wird zum Auftragen von Pulverschichten bei pulverbasierten additiven Fertigungsverfahren kein Ansaugen von Partikeln aus einem Partikelstaub oder einem andersartig fluidisierten Pulver heraus mit Hilfe eines Luftstroms durch das Pulverbett hindurch eingesetzt. Das vorstehend beschriebene neue Verfahren erlaubt eine höhere Packungsdichte der Partikel in der aufgetragenen Pulverschicht.

Weiter entfällt die Problematik, dass sehr feine Partikel im trocknen Zustand eine geringe Fließfähigkeit besitzen und deshalb unterhalb eines bestimmten mittleren Partikeldurchmessers nicht mehr zum Schichtauftrag geeignet sind. Feine Partikel bieten jedoch gerade den Vorteil einer hohe Oberflächenqualität, d.h. eine geringe Rauheit der erzeugten Prototypen, den Vorteil einer verbesserten Sinterfähigkeit der erzeugten Grünkörper, oder Vorteile bei der Einstellung bestimmter besonders feinkristalliner Gefüge, z.B. für ein Keramikbauteil.

Eine erhöhte Dichte des Pulverbetts führt zu einem festeren Pulverbett, wodurch die Stützfunktion des Pulverbetts erhöht wird. Vorteilhafterweise können so im Pulverbett die jeweils gewünschten Körper ohne zusätzliche Supportstrukturen aufgebaut werden.

Weiterhin ist der Schichtauftrag in nahezu jeder beliebigen Orientierung der Schicht möglich, da die Kräfte, welche durch den Gasstrom auf die Pulverpartikel einwirken, die Gravitationskraft übersteigen.

Zusammenfassend wird ein additives Fertigungsverfahren umfassend die Herstellung zumindest einer Schicht geometrisch dicht gepackter Partikel nach Anspruch 1 vorgeschlagen. Vorzugsweise sind die Partikel in Form eines im ersten Halbraum ausgebildeten Fließbetts homogen verteilt und werden vom Fließbett aus auf der Trennwand in geometrisch dichter Packung angeordnet. Auf der so erzeugten Schicht können auf dieselbe Weise weitere Schichten additiv aufgebaut werden. Das erfolgt beispielsweise, indem die Trennwand in Richtung auf den zweiten Halbraum zubewegt wird. Alternativ können weitere so oder anders erzeugte Schichten auf der additiv auf einer dem ersten Halbraum zugewandten Seite der Trennwand erzeugten Schicht gestapelt werden. Die dicht gepackten Partikel der übereinander in Form eines Schichtstapels angeordneten Schichten werden jeweils lokal, d.h. in diskreten Abschnitten der jeweiligen Schicht, fixiert. Diese diskreten Abschnitte entsprechen typischerweise einer Kontur, einer inneren oder einer äußeren Oberfläche eines nach Abschluss des Verfahrens im verdichteten Pulverbett eingebettet vorliegenden Formkörpers. Beim Fixieren erfolgt eine Anbindung der fixierten Partikel der oberen Schicht an die fixierten Partikel der darunter liegenden Schicht. Der Formkörper kann durch Resuspendierung bzw. Redispergierung von nicht fixierten Anteilen der Partikel freigelegt werden.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung, wie durch die Ansprüche definiert wird, abzuweichen.

### Referenzen

[1] Sachs E.M., Haggerty J.S., Cima M.J., Williams P.A., Inventors; Massaschussets Institute of Technology, Assignee. Three-dimensional printing techniques. US Patent 5,204,055; 1993 April 20;
[2] Deckard C.R., Inventor; Board of Regents, The University of Texas System, Assignee. Method and apparatus for producing parts by selective sintering. US Patent 4,863,538; 1989 September 5

## Patentansprüche

1. Fertigungsverfahren zur Herstellung einer Schicht geometrisch dicht gepackter Partikel in einem additiven Fertigungsverfahren, umfassend:
a) Bereitstellen einer Partikelschichtabscheidungsanordnung, umfassend einen ersten und einen zweiten Halbraum, wobei der erste Halbraum einen Partikel-Vorratsbehälter umfasst, und eine Trennwand den ersten Halbraum vom zweiten Halbraum trennt und die Trennwand permeabel ist für ein Dispersionsmedium und impermeabel ist für in dem Dispersionsmedium dispergierte Partikel;
b) Bereitstellen einer Partikeldispersion umfassend das Dispersionsmedium und darin dispergierte Partikel im ersten Halbraum, wobei die Partikeldispersion im Wesentlichen homogen im ersten Halbraum verteilt ist, wobei das Bereitstellen der Partikeldispersion durch ein Einleiten eines gerichteten Stromes des Dispersionsmittels in den Partikel-Vorratsbehälter unmittelbar im ersten Halbraum erfolgt;
c) Erzeugen eines Druckgradienten zwischen dem ersten und dem zweiten Halbraum, sodass der Druckgradient im ersten Halbraum einen zur Trennwand gerichteten Strom der Partikeldispersion bewirkt;
d) Abscheiden eines Partikel-Haufwerks umfassend geometrisch dicht gepackte Partikel auf der Trennwand durch Transport von Dispersionsmittel in den zweiten Halbraum; und:
e) Glätten des Partikel-Haufwerks mittels Schaben und/oder Schleifen, sodass Partikel des Partikel-Haufwerks solange abgetragen werden, bis die Schicht geometrisch dicht gepackter Partikel auf der Trennwand eine gleichmäßige Schichtdicke aufweist.

2. Fertigungsverfahren nach Anspruch 1, wobei zwischen Schritt c) und
Schritt d) weiter eingefügt ist ein Schritt:
cc) Bereitstellen eines Fließbetts dispergierter Partikel im ersten Halbraum, wobei das Fließbett zumindest abschnittsweise im Kontakt mit der Trennwand steht und eine Dichte der Dispersion dispergierter Partikel im Fließbett höher ist, als in einem verbleibenden Volumen des ersten Halbraumes.

3. Fertigungsverfahren gemäß Anspruch 1 bis 2, wobei das Partikel-Haufwerk lediglich zwei Phasen, umfassend eine Partikelphase und eine Fluidphase umfasst.

4. Fertigungsverfahren gemäß Anspruch 1 bis 3, weiter umfassend:
f) Ablegen der Schicht geometrisch dicht gepackten Partikel gleichmäßiger Schichtdicke außerhalb der Partikelschichtabscheidungsanordnung.

5. Fertigungsverfahren gemäß Anspruch 1, wobei das Erzeugen ein Einleiten eines Gases oder eines Gasgemisches umfasst.

6. Fertigungsverfahren gemäß einem der vorstehenden Ansprüche, wobei das Glätten mit Hilfe einer Streicheinheit erfolgt und die Streicheinheit eine rotierende Walze, eine rotierende Bürste, eine Klinge und/oder einen Schieber umfasst,
wobei die rotierende Walze, die rotierende Bürste, die Klinge und/oder der Schieber mit Hilfe der Streicheinheit über das Haufwerk geführt wird, sodass die gleichmäßige Schichtdicke erzielt wird,
wobei die gleichmäßige Schichtdicke einstellbar ist in einem Bereich von 500 nm bis 5 mm, insbesondere zwischen 1 µm und 500 µm, vorzugsweise zwischen 30 µm und 200 µm,
wobei die Klinge und/oder der Schieber rotierend oder starr mit der Streicheinheit verbunden sind/ist.

7. Additives Fertigungsverfahren umfassend die Herstellung einer Schicht geometrisch dicht gepackter Partikel mit einem Fertigungsverfahren nach Anspruch 1 wobei die Schicht eine gleichmäßige Schichtdicke aufweist und
g) Stapeln von verschiedenen Schichten der geometrisch dicht gepackten Partikel gleichmäßiger Schichtdicke;
gg) lokal begrenztes Verbinden benachbarter Partikel einer Schicht über die gesamte Schichtdicke dieser einen Schicht hinweg; und
ggg) zumindest teilweises Befestigen von unmittelbar benachbarten Schichten eines Schichtstapels zueinander, wobei das zumindest teilweise Befestigen in Bereichen lokal begrenzt verbundener benachbarter Partikel der benachbarten Schichten erfolgt.

## Claims

1. A manufacturing method for producing a layer of geometrically densely packed particles in an additive manufacturing method, comprising:
a) providing a particle layer deposition arrangement comprising a first and a second half space, the first half space comprising a particle reservoir, and a partition separating the first half space from the second half space, and the partition being permeable for a dispersion medium and impermeable for particles dispersed in the dispersion medium;
b) providing a particle dispersion comprising the dispersion medium and particles dispersed therein in the first half space, the particle dispersion being distributed substantially homogeneously in the first half space, the provision of the particle dispersion taking place directly in the first half space by introducing a directed flow of the dispersant into the particle reservoir;
c) generating a pressure gradient between the first and second half spaces so that the pressure gradient in the first half space brings about a flow of the particle dispersion which is directed toward the partition;
d) depositing a particle heap comprising geometrically densely packed particles on the partition by transporting dispersant into the second half space; and
e) smoothing the particle heap by means of scraping and/or grinding so that particles of the particle heap are removed until the layer of geometrically densely packed particles on the partition has a uniform layer thickness.

2. The manufacturing method according to claim 1, wherein furthermore a step is inserted between step c) and step d):
cc) providing a fluidized bed of dispersed particles in the first half space, the fluidized bed being in contact with the partition at least in sections, and a density of the dispersion of dispersed particles in the fluidized bed being higher than in a remaining volume of the first half space.

3. A manufacturing method according to claims 1 to 2, wherein the particle heap only comprises two phases, encompassing a particle phase and a fluid phase.

4. A manufacturing method according to claims 1 to 3, furthermore comprising:
f) placing the layer of geometrically densely packed particles having a uniform layer thickness outside the particle layer deposition arrangement.

5. The manufacturing method according to claim 1, wherein the generation comprises introducing a gas or a gas mixture.

6. A manufacturing method according to any one of the preceding claims, wherein the smoothing is carried out by way of a spreading unit, and the spreading unit comprises a rotating roller, a rotating brush, a blade and/or a pusher,
the rotating roller, the rotating brush, the blade and/or the pusher being guided over the heap by way of the spreading unit so that the uniform layer thickness is achieved,
the uniform layer thickness being settable in a range of 500 nm to 5 mm, in particular between 1 µm and 500 µm, and preferably between 30 µm and 200 µm,
the blade and/or the pusher being rotatably or rigidly connected to the spreading unit.

7. An additive manufacturing method, comprising the production of a layer of geometrically densely packed particles using a manufacturing method according to claim 1, the layer having a uniform layer thickness, and:
g) stacking various layers of the geometrically densely packed particles having a uniform layer thickness;
gg) linking, in a locally delimited manner, adjoining particles of a layer across the entire thickness of this one layer, and
ggg) at least partially fastening directly adjoining layers of a layer stack to one another, the at least partial fastening taking place in regions of adjoining particles of the adjoining layers which are linked in a locally delimited manner.

## Revendications

1. Procédé de fabrication pour la fabrication d'une couche de particules compactées de manière géométriquement dense dans un procédé de fabrication additif, comprenant :
a) la mise à disposition d'un dispositif de dépôt de couche de particules comprenant une première et une deuxième demi-chambres, dans lequel la première demi-chambre comprend un réservoir de particules et une cloison sépare la première demi-chambre de la deuxième demi-chambre et la cloison est perméable pour un milieu de dispersion et imperméable pour les particules dispersées dans le milieu de dispersion ;
b) la mise à disposition d'une dispersion de particules comprenant le milieu de dispersion et des particules dispersées dans celle-ci dans la première demi-chambre, dans lequel la dispersion de particules est répartie de manière globalement homogène dans la première demi-chambre, dans lequel la mise à disposition de la dispersion de particules a lieu grâce à une introduction d'un flux dirigé du milieu de dispersion vers le réservoir de particules directement dans la première demi-chambre ;
c) production d'un gradient de pression entre la première et la deuxième demi-chambre, de façon à ce que le gradient de pression provoque, dans la première demi-chambre, un flux de dispersion de particules dirigé vers la cloison ;
d) dépôt d'un amas de particules comprenant des particules compactées de manière géométriquement dense sur la cloison grâce au transport du milieu de dispersion vers la deuxième demi-chambre ; et
e) lisage de l'amas de particules par grattage et/ou ponçage, de façon à ce que les particules de l'amas de particules soient enlevées jusqu'à ce que la couche de particules compactées de manière géométriquement dense sur la cloison présente une épaisseur de couche uniforme.

2. Procédé de fabrication selon la revendication 1, dans lequel, entre l'étape c) et l'étape d), est insérée l'étape suivante :
cc) mise à disposition d'un lit fluidisé de particules dispersés dans la première demi-chambre, dans lequel le lit fluidisé est en contact avec la cloison au moins à certains endroits et une densité de la dispersion de particules dispersées dans le lit fluidisé est plus grande que dans le volume restant de la première demi-chambre.

3. Procédé de fabrication selon la revendication 1 à 2, dans lequel l'amas de particules comprend uniquement deux phases, comprenant une phase particulaire et une phase fluide.

4. Procédé de fabrication selon la revendication 1 à 3, comprenant en outre :
f) le dépôt de la couche de particules compactées de manière géométriquement dense d'une épaisseur de couche uniforme à l'extérieur du dispositif de dépôt de couche de particules.

5. Procédé de fabrication selon la revendication 1, dans lequel la production comprend l'introduction d'un gaz ou d'un mélange de gaz.

6. Procédé de fabrication selon l'une des revendications précédentes, dans lequel le lissage a lieu à l'aide d'une unité de couchage et l'unité de couchage comprend un rouleau rotatif, une brosse rotative, une lame et/ou un coulisseau
dans lequel le rouleau rotatif, la brosse rotative, la lame et/ou le coulisseau sont guidés à l'aide de l'unité de couchage au-dessus de l'amas, de façon à ce qu'une épaisseur de couche uniforme soit obtenue,
dans lequel l'épaisseur de couche uniforme est réglable dans un intervalle entre 500 nm et 5 nm, plus particulièrement entre 1 µm et 500 µm, de préférence entre 30µm et 200 µm,
dans lequel la lame et/ou le coulisseau est/sont relié(s) de manière rotative ou rigide avec l'unité de couchage.

7. Procédé de fabrication additif comprenant la fabrication d'une couche de particules compactées de manière géométriquement dense avec un procédé de fabrication selon la revendication 1, dans lequel la couche présente une épaisseur de couche uniforme et
g) l'empilement de différentes couches de particules compactées de manière géométriquement dense présentant une épaisseur de couche uniforme ;
gg) la liaison limitée localement de particules adjacentes d'une couche au-delà de l'épaisseur de couche totale de cette couche ; et
ggg) la fixation au moins partielle de couches directement adjacentes d'un empilement de couches les unes avec les autres, dans lequel la fixation au moins partielle a lieu au niveau de particules adjacentes reliées de manière limitée localement des couches adjacentes.
